# EUROPÄISCHE PATENTSCHRIFT

(11) **EP 1 680 256 B1**
(45) Veröffentlichungstag und Bekanntmachung des Hinweises auf die Patenterteilung: **06.07.2011**
(21) Anmeldenummer: 04802662.9
(22) Anmeldetag: 30.10.2004
(51) Int. Cl.: B23P 15/10, F02F 3/22, F16J 1/00, F02F 3/00

(54) **VERFAHREN ZUR HERSTELLUNG EINES KOLBENS FÜR EINEN VERBRENNUNGSMOTOR**
METHOD FOR PRODUCING A PISTON FOR AN INTERNAL COMBUSTION ENGINE
PROCEDE DE FABRICATION D'UN PISTON POUR UN MOTEUR A COMBUSTION INTERNE

(30) Priorität: 08.11.2003 DE 10352244
(43) Veröffentlichungstag der Anmeldung: 19.07.2006
(73) Patentinhaber: MAHLE GMBH, 70376 Stuttgart (DE)
(72) Erfinder: SCHARP, Rainer, 71665 Vaihingen (DE)
(74) Vertreter: Pohle, Reinhard
(86) Internationale Anmeldenummer: PCT/DE2004/002416
(87) Internationale Veröffentlichungsnummer: WO 2005/046929

(56) Entgegenhaltungen:
- CH-A- 374 855
- DD-A- 142 372
- DE-A1- 19 722 053
- FR-A- 1 244 722
- US-A- 4 651 631
- PATENT ABSTRACTS OF JAPAN Bd. 017, Nr. 701 (M-1533), 21. Dezember 1993 (1993-12-21) -& JP 05 240347 A (HINO MOTORS LTD), 17. September 1993 (1993-09-17)

## Beschreibung

Die Erfindung betrifft ein Verfahren zur Herstellung eines Kolben für einen Verbrennungsmotor nach dem Oberbegriff des Patentanspruches. Ein solches Verfahren is aus der Patentschrift DD 142 372 bekannt.

Aus der Patentschrift DD 142 372 ist es bekannt, einen aus Aluminium bestehenden Kolben herzustellen, indem im Gießverfahren ein Aluminiumgrundkörper und zudem aus Aluminium ein Ringelement zur Verstärkung des Kolbenrandbereiches hergestellt werden. In das Ringelement wird hierbei eine Ausnehmung für einen Kühlkanal eingearbeitet. Im Anschluss daran wird auf den Grundkörper ein Stahlring geschweißt, wonach auf den mit dem Stahlring versehenen Grundkörper das Ringelement aufgeschweißt wird. In einem letzten Arbeitsschritt wird in den Stahlring eine Kolbenringnut für einen Verdichtungsring eingeformt. Nachteilig ist hierbei die Komplexität des Herstellungsverfahrens.

Diesen Nachteil des Standes der Technik zu vermeiden, ist Aufgabe der Erfindung. Gelöst wird die Aufgabe mit den im Kennzeichen des Patentanspruches stehenden Merkmalen.

Eine erhebliche Vereinfachung des Verfahrens zur Herstellung eines Aluminiumkolbens ergibt sich dadurch, dass das Ringelement im Verbundgussvelfahren hergestellt wird, wobei ein Ringträger mit einem angeformten Kühlkanal in das Ringelement eingegossen wird.

Ein Ausführungsbeispiel der Erfindung wird im Folgenden anhand der Zeichnungen beschrieben. Es zeigen
- Fig. 1: einen Kolben für einen Verbrennungsmotor mit einem Aluminium-Ring- element gemäß der Erfindung in einem aus zwei Hälften bestehenden Schnittbild, das zwei um 90° versetzte Längsschnitte des Kolbens zeigt, und
- Fig. 2: eine vergrößerte Darstellung des Schnittes durch den Randbereich des Kolbenbodens mit dem Ringelement.

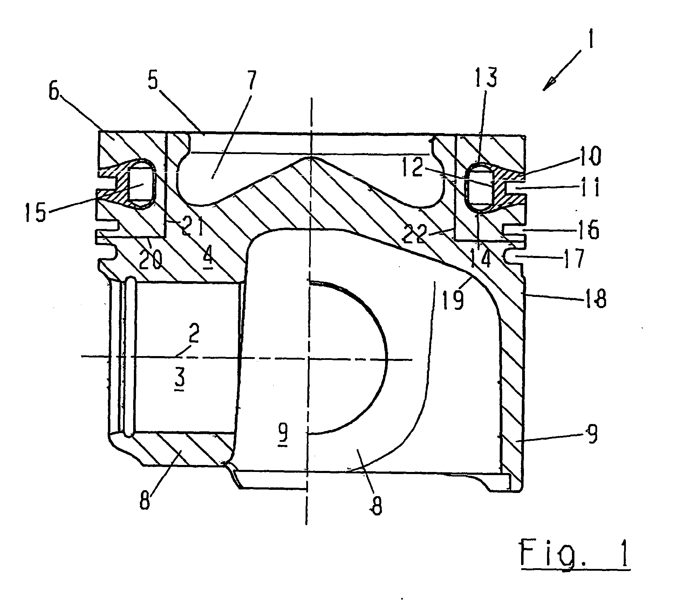

Fig. 1 stellt einen Kolben 1 für einen Verbrennungsmotor in einem aus zwei Hälften bestehenden Schnittbild dar, von dem die linke Hälfte einen Schnitt des Kolbens 1 entlang einer Längsachse 2 einer Nabenbohrung 3 und die rechte Hälfte einen um 90° dazu versetzten Schnitt durch den Kolben 1 zeigt.

Der Kolben 1 besteht aus einem im Wesentlichen zylinderförmigen Grundkörper 4, dessen eine Stirnfläche den Kolbenboden 5 bildet. In den radial äußeren Bereich des Kolbenbodens 5 ist im vorliegenden Ausführungsbeispiel eine im Querschnitt rechteckige Ausnehmung 22 eingeformt, in die ein Ringelement 6 eingepasst ist. Im zentralen Bereich des Kolbenbodens 5 ist eine Brennkammer 7 angeordnet. Weiterhin weist der Grundkörper 4 auf seiner dem Kolbenboden 5 abgewandten Unterseite Bolzennaben 8 für die Nabenbohrungen 3 und die Bolzennaben 8 miteinander verbindende Schaftelemente 9 auf. Das Ringelement 6 weist einen Ringträger 10 mit einer Ringnut 11 für einen in der Figur nicht dargestellten Verdichtungsring auf.

An die radial innen liegende, zylinderförmige Fläche 12 des aus NiResist bestehenden Ringträgers 10 sind die freien Schenkel 13, 14 eines im Wesentlichen torusförmigen, im Schnitt C-förmigen und nach radial außen offenen Kühlkanals 15 angeschweißt, der aus Stahlblech hergestellt ist. Über in der Figur nicht dargestellte Zu- und Abflussöffnungen zwischen dem Kühlkanal 15 und der Kolbeninnenseite 19 kann Kühlöl in den Kühlkanal 15 ein- und darauf wieder abgeleitet werden.

Zudem ist in das Ringelement 6 eine sich in Richtung Schaftelemente 9 an den Ringträger 10 anschließende, weitere Ringnut 16 eingeformt. Eine Ölringnut 17 ist nahe dem Ringelement 6 in der Mantelfläche 18 des Grundkörpers 4 angeordnet.

Sowohl der Grundkörper 4 als auch das Ringelement 6 bestehen aus Aluminium, wobei dem Grundkörper 4 durch Schmieden die gewünschte Form gegeben wird, wohingegen das Ringelement 6 mittels eines Gießverfahrens hergestellt wird. Hierbei wird im Verbundgussverfahren der mit dem Kühlkanal 15 versehene Ringträger 10 in das Ringelement 6 eingegossen. In einem weiteren Arbeitsgang werden der Grundkörper 4 und das Ringelement 6 miteinander verschweißt, wobei bevorzugterweise das Elektronenstrahl-Schweißverfahren angewandt wird. Hierbei ergeben sich gemäß dem vorliegenden Ausführungsbeispiel eine in radialer Richtung liegende Schweißnaht 20 und eine in axialer Richtung angeordnete Schweißnaht 21. In einem letzten Arbeitsgang wird dem Kolben 1 mittels eines spanabhebenden Fertigungsverfahren, wie bspw. durch Drehen, die gewünschte Endform geben.

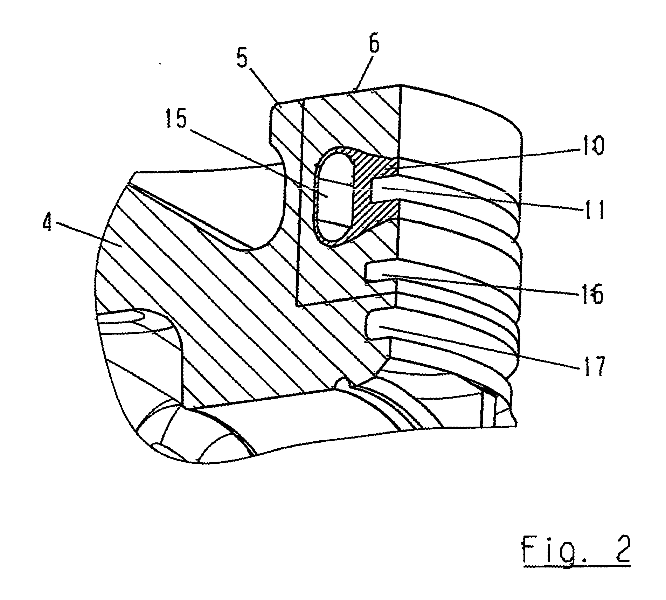

Das in Fig. 2 vergrößert dargestellte Schnittbild des Randbereiches des Kolbenbodens 5 zeigt das aus Aluminium bestehende Ringelement 6 mit dem darin eingegossenen gekühlten Ringträger 10, der auf seiner radialen Außenseite die Ringnut 11 für einen Verdichtungsring und auf seiner radialen Innenweite den Kühlkanals 15 aufweist. Gut zu erkennen ist auch die weitere, im Ringelement 6 befindliche Ringnut 16 und die in den Grundkörper 4 eingeformte Ölringnüt 17.

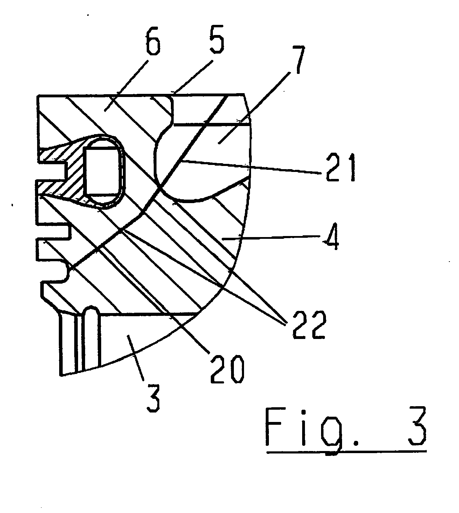

Gemäß weiteren in Fig. 3 beispielhaft dargestellten Ausführungsbeispieten der Erfindung kann die Ausnehmung 22 so geformt sein, dass die umlaufende Schweißnaht 21 zur Kolbenlängsachse hin geneigt ist und zum Kolbenboden 5 hin konisch zuläuft, und dass die Schweißnaht 20 eine von der radialen Achsrichtung bspw. zur Nabenbohrung 3 hin abweichende Ausrichtung aufweist.

### Bezugszeichenliste

- 1: Kolben
- 2: Längsachse
- 3: Nabenbohrung
- 4: Grundkörper
- 5: Kolbenboden
- 6: Ringelement
- 7: Brennkammer
- 8: Bolzennabe
- 9: Schaftelement
- 10: Ringträger
- 11: Ringnut
- 12: Fläche des Ringträgers 10
- 13: Schenkel
- 14: Schenkel
- 15: Kühlkanal
- 16: Ringnut
- 17: Ölringnut
- 18: Mantelfläche
- 19: Kolbeninnenseite
- 20: Schweißnaht
- 21: Schweißnaht
- 22: Ausnehmung

## Patentansprüche

1. Verfahren zur Herstellung eines Kolbens (1) für einen Verbrennungsmotor
- mit einem im Wesentlichen zylinderförmigen Grundkörper (4) aus Aluminium dessen eine Stirnseite einen Kolbenboden (5) bildet,
- mit auf der dem Kolbenboden (5) abgewandten Unterseite des Grundkörpers (4) angeordneten Bolzennaben (8) mit Nabenbohrungen (3) und
- mit die Bolzennaben (8) miteinander verbindenden Schaftelementen (9), **dadurch gekennzeichnet,**
- **dass** der Grundkörper (4) im Schmiedeverfahren hergestellt wird, wobei in den radial äußeren Randbereich des Kolbenbodens (5) eine Ausnehmung (22) eingeformt wird,
- **dass** an eine radial innen liegende, zylinderförmige Fläche (12) eines Ringträgers (10) aus NiResist die freien Schenkel (13, 14) eines im Wesentlichen torusförmigen, im Schnitt C-förmigen, nach radial außen offenen und aus Stahlblech gefertigten Kühlkanals (15) angeschweißt werden,
- **dass** der mit dem Kühlkanal (15) versehene Ringträger (10) im Verbundgussverfahren in ein Ringelement (6) aus Aluminium eingegossen wird, dem hierbei eine derartige Form gegeben wird, dass es in die Ausnehmung (22) passt,
- **dass** das Ringelement (6) in die Ausnehmung (22) eingepasst und mit dem Grundkörper (4) verschweißt wird, und
- **dass** dem Kolben (1) mittels eines spanabhebenden Fenigungsverfahrens die Endform gegeben wird.

2. Verfahren zur Herstellung eines Kolbens (1) für einen Verbrennungsmotor nach Anspruch 1, **dadurch gekennzeichnet, dass** in den radial äußeren Randbereich des Kolbenbodens (5) eine im Schnitt rechteckige Ausnehmung (22) eingeformt wird, und dass dem Ringelement (6) eine derartige, im Schnitt rechteckige Form gegeben wird, dasses in die Ausnehmung (22) passt.

3. Verfahren zur Herstellung eines Kolbens (1) für einen Verbrennungsmotor nach Anspruch 1, **dadurch gekennzeichnet, dass** dem Ringelement (6) eine derartige Form gegeben wird, dass dessen radial innen liegende Oberfläche mit dem Grundkörper (4) eine zum Kolbenboden (5) hin konisch zulaufende Schweißnaht (21) bildet.

4. Verfahren zur Verstellung eines Kolbens (1) für einen Verbrennungsmotor nach Anspruch 1 oder 3, **dadurch gekennzeichnet, dass** dem Ringelement (6) eine derartige Form gegeben wird, dass dessen axial in Richtung der Nabenbohrung (3) liegende Oberfläche mit dem Grundkörper (4) eine Schweißnaht (20) bildet, die eine von der radialen Achsrichtung abweichende Ausrichtung aufweist.

## Claims

1. Method for producing a piston (1) for an internal combustion engine
- with a substantially cylindrical body (4) made of aluminium, one face side of which forms a piston crown (5),
- with bolt hubs (8) having hub bores (3) arranged on the underside of the body (4) facing away from the piston crown (5) and
- with shaft elements (9) connecting the bolt hubs (8) together, **characterised in that**
- the body (4) is produced in a forging process, wherein a recess (22) is formed in the radially outer edge section of the piston crown (5),
- **in that** the free arms (13,14) of a substantially torus-shaped cooling channel (15) with a C-shaped cross section, which is open radially outwards and made of sheet steel, are welded onto a radially inner-lying cylindrical surface (12) of a ring support (10) made of NiResist,
- **in that** the ring support (10) provided with the cooling channel (15) is cast in a compound casting process into a ring element (6) made of aluminium, which is hereby shaped so that it fits into the recess (22),
- **in that** the ring element (6) is fitted into the recess (22) and is welded to the body (4), and
- **in that** the final shape of the piston (1) is obtained by means of a chip removal manufacturing process.

2. Method for producing a piston (1) for an internal combustion engine according to claim 1, **characterised in that** in the radially outer edge area of the piston crown (5) a recess (22) with a rectangular cross section is formed, and **in that** a similar shape with a rectangular cross section is given to the ring element (6) so that it fits into the recess (22).

3. Method for producing a piston (1) for an internal combustion engine according to claim 1, **characterised in that** a similar shape is given to the ring element (6), **in that** its radially inner-lying surface with the body (4) forms a weld seam (21) running conically towards the piston crown (5).

4. Method for producing a piston (1) for an internal combustion engine according to claim 1 or 3, **characterised in that** a similar shape is given to the ring element (6), **in that** its surface lying axially in the direction of the hub bore (3) forms a weld seam (20) with the body (4) which has a different alignment from the radial axial direction.

## Revendications

1. Procédé de fabrication d'un piston (1) pour un moteur à combustion interne comprenant
- un corps de base (4) en aluminium essentiellement cylindrique, dont un côté frontal forme un fond de piston (5),
- des moyeux d'axe (8), avec des alésages de moyeux (3), disposés sur le côté inférieur du corps de base (4) opposé au fond de piston (5),
- des éléments de tige (9) assemblant entre eux les moyeux d'axe (8),
**caractérisé en ce que**
- le corps de base (4) est fabriqué dans le procédé de forgeage, un creux (22) étant alors conformé dans la zone de bordure radiale externe du fond de piston (5),
- les branches libres (13, 14) d'un canal de refroidissement (15) essentiellement toroïdal, en forme de C en coupe, ouvert dans la direction radiale extérieure et fabriqué en tôle d'acier, sont soudées sur une surface (12) cylindrique, située dans la direction radiale intérieure, d'un support annulaire (10) en Ni-Résist,
- le support annulaire (10), muni du canal de refroidissement (15), est coulé dans le procédé de coulée composite dans un élément annulaire (6) en aluminium, auquel est alors conférée une forme telle qu'il s'adapte dans le creux (22),
- l'élément annulaire (6) est encastré dans le creux (22) et soudé avec le corps de base (4), et
- la forme définitive est conférée au piston (1) au moyen d'un procédé de fabrication par enlèvement de copeaux.

2. Procédé de fabrication d'un piston (1) pour un moteur à combustion interne suivant la revendication 1, **caractérisé en ce qu'**un creux (22) rectangulaire en coupe est conformé dans la zone de bordure radiale externe du fond de piston (5), et une forme rectangulaire en coupe, telle que l'élément annulaire (6) s'adapte dans le creux (22), est conférée à ce dernier.

3. Procédé de fabrication d'un piston (1) pour un moteur à combustion interne suivant la revendication 1, **caractérisé en ce qu'**une forme telle est conférée à l'élément annulaire (6) que la surface de ce dernier, située dans la direction radiale intérieure, forme avec le corps de base (4) un joint soudé (21) se terminant en cône en direction du fond de piston (5).

4. Procédé de fabrication d'un piston (1) pour un moteur à combustion interne suivant l'une des revendications 1 et 3, **caractérisé en ce qu'**une forme telle est conférée à l'élément annulaire (6) que la surface de ce dernier, située dans la direction axiale en direction de l'alésage de moyeu (3), forme avec le corps de base (4) un joint soudé (20) qui présente une orientation différente de la direction axiale radiale.
